Europäisches Patentamt

European Patent Office

Office européen des brevets

(11) Veröffentlichungsnummer: **0 451 327 A2**

(12) **EUROPÄISCHE PATENTANMELDUNG**

(21) Anmeldenummer: 90118775.7

(22) Anmeldetag: 30.09.90

(51) Int. Cl.5: **C23C 26/00**, C10M 101/00, C10M 111/00, C22F 1/08

(30) Priorität: 02.10.89 DE 3932865

(43) Veröffentlichungstag der Anmeldung:
16.10.91 Patentblatt 91/42

(84) Benannte Vertragsstaaten:
AT BE CH DE DK ES FR GB GR IT LI LU NL SE

(71) Anmelder: **Akin, Okan Dr.**
**Heerderweg 45**
**NL-6224 LA Maastricht(NL)**

Anmelder: **Grefkes, Horst Dr.**
**Bergstr. 67a**
**W-4060 Viersen 12(DE)**

Anmelder: **Troost, Alex, Dr. Professor**
**Holset 9**
**NL-6295 NC Lemiers/Vaals(NL)**

(72) Erfinder: **Akin, Okan Dr.**
**Heerderweg 45**
**NL-6224 LA Maastricht(NL)**
Erfinder: **Grefkes, Horst Dr.**
**Bergstr. 67a**
**W-4060 Viersen 12(DE)**
Erfinder: **Troost, Alex, Dr. Professor**
**Holset 9**
**NL-6295 NC Lemiers/Vaals(NL)**

(74) Vertreter: **Uhlmann, Hans, Dr. rer.nat.,**
**Dipl.-Chem.**
**Hofstrasse 83**
**W-4060 Viersen 1(DE)**

(54) **Innenseitig gegen Korrosion geschütztes Metallrohr durch eingebrannte Schmiermittelschicht.**

(57) Ein unter Kaltverformung hergestelltes Metallroh, insbesondere Kupferrohr ist gegen Korrision dadurch geschützt, daß es mindestens innenseitig eine zusammenhängende Schicht aus dem Crackprodukt von bei der Verformung verwendeten Schmiermitteln und zugesetzten C-haltigen Additiven aufweist.

EP 0 451 327 A2

## GEGEN KORROSION GESCHÜTZTES METALLROHR

Die Erfindung betrifft ein gegen Korrosion, insbesondere Lochfraßkorrosion, geschütztes Metallrohr, insbesondere Kupferrohr, das unter Kaltverformung und Mitverwendung von Schmiermitteln hergestellt ist.

Rohre finden in größtem Ausmaß seit Jahrtausenden in Haus und Gewerbe Verwendung und bestehen derzeit überwiegend aus Metall. An sonstigen Materialien haben im wesentlichen noch Ton und Keramik und neuerdings Kunststoffe Bedeutung. Die erste Gruppe hat den Nachteil der Bruchgefahr. Bei Kunststoffen besteht die Gefahr der Alterung des Kunststoffes. Es haben deshalb Metallrohre nach wie vor den weitaus überwiegenden Anteil an Rohrmaterialien, insbesondere auch wegen der weit entwickelten Verbindungstechnik durch Schweißen und Löten und wegen der Möglichkeit, sie in gewissem Ausmaß zu biegen, wobei sie diese Verbiegung im Gegensatz zu Kunststoffrohren beibehalten.

Nachteilig an Rohren aus Metall ist, daß sie nicht ausreichend korrosionsfest sind. Aus diesem Grunde ist man in letzter Zeit von den zwischenzeitlich überwiegend benutzten Materialien Blei, dem wegen seiner Giftigkeit Bedenken entgegengebracht werden, Gußeisen und Stahl verstärkt wieder zum Material Kupfer zurückgekehrt. In immer stärkerem Maße stellt sich aber auch bei Kupfer heraus, daß es nicht so korrosionsfest ist, wie man sich das erhofft hat. Ganz besonderen Kummer macht dabei die sogenannte Lochfraßkorrosion. Ihre Ursache hat diese Schadensart wahrscheinlich darin, daß winzige Störungen im Metallgefüge oder in der mehr oder weniger dicken Oxidschicht, welcher Art sie auch sein mögen und welche Ursache sie haben, zu Lokalelementbildungen führen, die ausgehend von krater- oder nadelstichartigen Angriffsstellen sehr rasch zur anodischen Auflösung des Werkstoffs an diesen Stellen und zur Zerstörung der Wandung des Rohres führen. Ähnliche Schäden treten auch bei anderen Metallen wie Gußeisen und Stahl auf. Der Begriff Kupfer ist im Folgenden weit zu verstehen und umfaßt von nahezu reinem Kupfer auch alle gängigen Kupferlegierungen.

Es besteht deshalb ein dringendes Bedürfnis, dem Übelstand der Korrosion, insbesondere der Lochfraßkorrosion zu begegnen und Metallrohre zu entwickeln, die nicht in mehr oder weniger kurzer Zeit zerstört werden. Besonders dringlich ist das Problem bei Kupferrohren, weil man dieses verhältnismäßig edle und damit auch kostenaufwendige Material gerade seiner Beständigkeit wegen wählt und deshalb besonders enttäuscht ist, wenn schon nach kurzer Zeit Korrosionsschäden auftreten, bzw. die Wandung durchlöchert wird. Im nachfolgenden wird deshalb die Erfindung am Beispiel Kupferrohr näher erläutert. Sie betrifft aber alle Metallrohre, wie beispielsweise solche aus Gußeisen und Stahl und umfaßt diese mit, soweit diese Rohre unter Kaltverformung und Mitverwendung von Schmiermitteln hergestellt sind.

Das Herstellverfahren der Kaltverformung, für das es verschiedene Varianten gibt, muß hier nicht näher beschrieben werden, da es Stand der Technik ist. Es wird nur soweit darauf eingegangen, so weit das zur Erläuterung der Erfindung notwendig ist. Gemeinsam ist diesen Kaltverformungsverfahren, daß dabei Schmiermittel wie Seifen, Öle u.ä. mitverwendet werden, bei der Kaltverformung insbesondere Mineralöle, um beispielsweise bei Ziehmaschinen die Reibung zwischen Werkzeug und dem umzuformenden Metall herabzusetzen. Nach der Verformung und Reinigung des so hergestellten Metallrohres werden Reste des Schmiermittels durch eine chemische bzw. mechanische Reinigung u/o eine Glühbehandlung bei 600 bis 650°C entfernt, weil gerade diese Rückstände Ansatzpunkt für Korrosionserscheinungen sind. Um diese Schmiermittelreste möglichst vollständig zu entfernen, ist man deshalb von den früher meist verwendeten mittelschweren Mineralölen zu Leichtölen als Schmiermittel übergegangen, ohne daß es gelungen ist, damit eine Lösung des technischen Problems der Korrosion, insbesondere der Lochfraßkorrosion zu erreichen.

Der Erfindung liegt die Aufgabe zugrunde, Metallrohre, insbesondere Kupferrohre bereitzustellen, die in ihrer Beständigkeit gegenüber Korrosion, insbesondere gegenüber Lochfraß, wesentlich verbessert sind.

Die gestellte Aufgabe wird gelöst durch ein Metallrohr mit den kennzeichnenden Merkmalen des Anspruchs 1. In den Unteransprüchen 2 bis 8 sind vorteilhafte Ausbildungen des Metallrohres nach Anspruch 1 angegeben.

Die Ansprüche 9 bis 11 betreffen die Herstellung des vorgeschlagenen Rohres.

Die Lösung der Aufgabe besteht in einem Metallrohr gemäß dem Oberbegriff des Patentanspruches 1, das dadurch gekennzeichnet ist, daß das Metallrohr mindestens innenseitig eine zusammenhängende Schicht von 5 bis 200μm Dicke aufweist, die das Crackprodukt aus den bei der Verformung verwendeten Schmiermitteln, denen das 0,1 bis 10-fache ihres Gewichtes an c-haltigen Additiven zugesetzt ist, darstellt.

Die Erfindung verläßt gänzlich die bisher beschrittenen Wege zur Lösung des oben aufgezeigten Problems, nämlich der möglichst restlosen Entfernung von Rückständen des Schmiermittels und schafft bewußt eine Schicht als Schutzfilm, für die freilich Voraussetzung ist, daß sie ein ganzes Eigenschaftsspektrum erfüllt:

Sie muß zusammenhängend sein, um Lokalelementbildung zu verhindern.

Sie muß chemisch widerstandsfähig sein, insbesondere gegen im Wasser befindliche Substanzen wie Chlor, Sulfate, Nitrate Carbonate und andere Salze des Natriums, Kaliums, Calciums und anderer Metalle.

Sie darf nicht gesundheitsschädlich oder gar toxisch sein.

Sie muß wasserfest sein.

Sie muß mechanisch fest sein und fest auf dem Metallrohr haften.

Sie muß widerstandsfähig sein, insbesondere gegenüber stoßartigen Belastungen wie plötzlichen Druckerhöhungen.

Sie muß ein gewisses Maß an Flexibilität und Dehnbarkeit aufweisen, damit sie bei Montagearbeiten, bei denen Rohre häufig auch gebogen werden, keine schädlichen Defekte wie größere Risse bekommt.

Die erfindungsgemäße Schicht erfüllt all diese Erfordernisse in hervorragender Weise. Wahrscheinlich beruht der Fortschritt des Metallrohres nach der Erfindung darauf, daß sich beim Glühen der aufgebrachten Schicht aus Schmiermittel und C-haltigem Additiv eine Schicht bildet, die im wesentlichen aus Graphit besteht, der chemisch inert ist und durch seine blättchenförmige Kristallausbildung in sehr guter Weise filmbildend und flächendeckend ist, daß aber andererseits die C-haltigen Additive diese Graphitpartikelchen einbinden und für die erforderliche Elastizität und mechanische Beständigkeit sorgen.

Die Palette der verwendbaren C-haltigen Additive ist groß, da nahezu sämtliche organischen Verbindungen sich in der Hitze zersetzen und Crackprodukte ergeben, soweit sie nicht gasförmig und niedrig siedend sind und sich dadurch verflüchtigen. Eine weitere Einschränkung ist, daß sie sich nicht explosionsartig zersetzen und keine chemisch aggressiven Substanzen enthalten oder freisetzen dürfen. Insbesondere müssen sie frei von Schwefel, Schwefelverbindungen und Chlorverbindungen sein. Als Additive kommen in Betracht längerkettige Alkane, Arene wie Naphthalin, höhere Alkohole und Phenole, Kohlenhydrate und andere Naturstoffe wie Wachse.

Bevorzugt geeignet sind als C-haltige Additive höhermolekulare Verbindungen, die sich nicht verflüchtigen, sondern beim Einbren nen gecrackt werden und zusammen mit den ebenfalls gecrackten Schmiermitteln die erwünschte Schicht ergeben. Besonders bewährt haben sich höhermolekulare Verbindungen auf Basis von Polymerisations-, Polykondensations- und/oder Polyadditionskunststoffen und deren Monomere und Oligomere. Der Einsatz von Monomeren, Oligomeren oder niederen Polymeren hat den Vorzug, daß diese flüssig sind oder als Emulsionen vorliegen und sich so günstig auftragen lassen, beim Erhitzen dann polymerisieren, kondensieren oder sich addieren bzw. durch Zusätze vernetzt werden. Die Erzeugung der höhermolekularen Verbindung aus Monomeren, Oligomeren oder niederen Polymerisations-, Polyadditions- bzw. Polykondensationsprodukten empfiehlt sich besonders dann, wenn dünne Schichten erzeugt werden sollen. Besonders bewährt haben sich Polyamide, Polycarbonate auf der Basis von Bisphenol A und Styrol. Als Schmiermittel als einer der wesentlichen Bestandteile der zusammenhängenden Schicht werden im Gegensatz zu den Entwicklungen der letzten Zeit bevorzugt mittelschwere Mineralöle eingesetzt, weil diese beim Einbrennen sich nicht weitgehend verflüchtigen, sondern zusammen mit den C-haltigen Additiven zu Crackprodukten und der angestrebten zusammenhängenden Schicht führen. Die Schmiermittel haben also eine Doppelfunktion zu erfüllen, nämlich die eigentliche Aufgabe der Schmierung, d.h. der Verminderung der Reibung zwischen Metallrohr und Formwerkzeug, zum anderen die Funktion als Bestandteil der auszubildenden zusammenhängenden Schicht.

Es liegt deshalb auch noch im Rahmen der Erfindung, daß für die Ausbildung der zusammenhängenden Schicht Substanzen ausgewählt werden, die sowohl das Schmiermittel als auch das C-haltige Additiv darstellen, so daß eine einzige Substanz beide Funktionen erfüllt, was in einem der Beispiele beschrieben ist. Bevorzugt bleibt aber die Ausbildung der zusammenhängenden Schicht aus unterschiedlichen Substanzen für das Schmiermittel und das C-haltige Additiv, weil damit eine bessere Abstimmung beider Bestandteile für ihre Aufgaben möglich ist, insbesondere für die Doppelfunktion des Schmiermittels im Rahmen der Erfindung. Die Dicke der Schicht ist von einer Reihe von Einflußgrößen wie dem Rohrdurchmesser, dem im Rohr zu transportierenden Medium, den Strömungsbedingungen u. ä. abhängig und beträgt 5 bis 200 $\mu$m, bevorzugt 7 bis 100 $\mu$m. In den meisten Fällen sind 10 bis 30 $\mu$m ausreichend und stellen einen ganz besonders bevorzugten Bereich dar. Eine Schicht dieser Dicke ist einerseits dick genug, um einen zusammenhängenden Film auch dann sicherzustellen, wenn das Rohr Belastungen bei der Verarbeitung, z.B. beim Biegen ausgesetzt ist, andererseits sollte sie schon aus Materialersparnisgründen nicht unnötig dick sein, so daß Schichtdicken über 30 $\mu$m nur bei besonderen Beanspruchungen und bei großen Rohrdurchmessern gerechtfertigt erscheinen.

Eine ganz besonders bevorzugte weitere Ausgestaltung der Erfindung besteht darin, daß die Schicht Metalle, bevorzugt in Form von feinverteiltem Pulver, enthält, die gegenüber dem Metall, aus dem das Rohr geformt ist, unedler sind.

Bei einem Kupferrohr nach der Erfindung haben sich als Zusätze zum Additiv besonders Aluminium, Magnesium, Zink und Eisen bewährt. Der Anteil dieser Metalle ist sowohl von der spezifischen Eigenschaft des betreffenden Metalls als auch von seinem spezifischen Gewicht abhängig. Es liegt zweckmäßig bei 1 bis 30 Gew.%, vorzugsweise bei 5 bis 10 Gew.% bezogen auf die gesamte Schicht.

Durch den Zusatz dieser unedlen Metalle wird erreicht, daß selbst für den Fall, daß die erfindungswesentliche Schicht doch einmal verletzt werden sollte, nicht das Metallrohr angegriffen wird, sondern zunächst die zugesetzten unedlen Metalle als sogenannte Opfermetalle in Lösung gehen und so eine Beschädigung oder Zerstörung des zu schützenden Metallrohres ganz beträchtlich verzögert wird und auch in solchen Fällen die Lebensdauer der Rohre deutlich erhöht bleibt. Um eine möglichst feine und gleichmäßige Verteilung der gegenüber dem Rohrmetall unedleren Metalle zu gewährleisten, werden diese dem Beschichtungsmaterial bevorzugt in Form von zersetzlichen Verbindungen, insbesondere von solchen eingebracht, die sich bei den Einbrenntemperaturen zersetzen und dadurch gewährleisten, daß die unedleren Metalle in feinverteilter Form in der Schicht vorliegen. Besonders zweckmäßig ist die Einbringung in Form von metallorganischen Verbindungen, weil diese bei der Zersetzung rückstandsfrei in die reinen Metalle zersetzt werden.

Ganz wesentlicher Bestandteil der Erfindung ist das Verfahren zur Erzeugung der zusammenhängenden Schicht. Es besteht darin, daß die Formgebung des Metallrohres mit einem Schmiermittel erfolgt, dem bis zum 0,1- bis 10fachen seines Gewichtes C-haltige Additive und gegebenenfalls gegenüber dem Rohrmetall unedlere Metalle bzw. hitzezersetzliche Metallverbindungen zugegeben sind und das Gemisch aus Schmiermittel und Additiven anschließend bei 150° bis 700° C eingebrannt wird, vorzugsweise bei 300° bis 600° C. Die Einbrenntemperaturen sind dabei wiederum von einer Reihe von Faktoren wie den verwendeten Additiven und Schmiermitteln, der gewünschten Schichtdicke u.ä. abhängig. Als allgemeine Richtlinie läßt sich angeben, daß sie niedriger sein werden als die bisherigen Glühtemperaturen, mit denen das Schmiermittel restlos entfernt werden sollte, und so liegen, daß noch genügend Bestandteile des Additivs erhalten bleiben, um die gebildeten Graphitteilchen in der gebildeten Schicht einzubringen und deren Zusammenhang und Elastizität zu gewährleisten.

Der Gewichts- bzw. Masseanteil der C-haltigen Additive erstreckt sich über sehr weite Bereiche vom 0,1- bis 10fachen des Schmiermittels und muß je nach dem eingesetzten Schmiermittel und den C-haltigen Additiven optimiert werden. Dabei lassen sich folgende Grundregeln aufstellen:

Je schwerer bzw. höher im Molekulargewicht das Schmiermittel ist, um so geringer kann der Anteil des C-haltigen Additivs sein, bis hin zu dem Sonderfall, bei dem das Schmiermittel sowohl seine schmierende Funktion als auch die des C-haltigen Additivs erfüllt.

Es besteht auch ein enger Zusammenhang zwischen der prozentualen Zusammensetzung der Schicht und der Einbrenntemperatur, wobei stets Bedingung ist, daß die Schicht die an sie gestellten Eigenschaften erfüllt, wie zusammenhängende Schicht, genügende mechanische Festigkeit hinsichtlich der Verankerung auf dem Metallrohr und gegenüber stoßartigen Belastungen, ausreichende Dehnbarkeit und Elastizität.

Auch das Verfahren unterscheidet sich also in seiner Zielsetzung gänzlich vom Bisherigen: Während die Glühbehandlung bisher dazu diente, das notwendige Schmiermittel möglichst gänzlich zu entfernen, wird erfindungsgemäß der Glüh- und Crackprozeß genutzt, um eine zusammenhängende Schicht aus Schmiermitttel, C-haltigen Additiven und vorteilhafterweise unedleren Metallen zu bilden.

Ein ganz erheblicher Vorteil der Erfindung liegt darin, daß zur Erzeugung der erfingunswesentlichen Schicht keine oder nur geringfügige Änderungen apparativer Art erforderlich sind, sondern das Verfahren sich in das bisherige Formgebungs- und Nachbehandlungsverfahren für Metallrohre integrieren bzw. diesem anpassen läßt. Dabei dienen freilich einzelne Arbeitsschritte einem ganz anderen Zweck, wie beispielsweise die Glühbehandlung, die bisher die möglichst restlose Entfernung des Schmiermittels bewirken sollte, während sie beim Verfahren nach der Erfindung der Ausbildung und dem Einbrennen der zusammenhängenden Schicht dient.

Das Verfahren gemäß der Erfindung läßt sich in zwei vorteilhaften Varianten durchführen. Die eine besteht darin, daß beim Ziehvorgang Schmiermittel, C-haltige Additive und gegebenenfalls unedlere Metalle bzw. deren hitzezersetzbare Verbindungen bei der Formgebung zugegeben und anschließend eingebrannt werden. Dieses Verfahren hat den Vorteil eines einmaligen Auftrags aller für die zusammenhängende Schicht erforderlichen Substanzen.

Die andere Verfahrensvariante besteht darin, daß das Schmiermittel wie üblich beim Ziehvorgang dem Ziehwerkzeug zugeführt wird, die C-haltigen Additive und gegebenenfalls unedleren Metalle bzw. deren hitzzersetzbare Verbindungen in einem getrennten Arbeitsschritt nach dem Ziehen auf die zu schützende Wandung des Metallrohres aufgebracht werden. Der Vorteil dieser Verfahrensweise besteht darin, daß mit einem getrennten Arbeitsschritt größere Mengen an C-haltigen Additiven aufgetragen werden können. Auch bei dieser zweckmäßigen Variante ist im allgemeinen kein zusätzlicher apparativer Aufwand erforderlich, weil beim bisherigen Verfahren nach dem Stand der Technik sich an den Formgebungsprozeß meist noch ein Reinigungsschritt anschloß, um mit Hilfe von Lösungsmitteln und unter Hindurchführung von Bürsten und ähnlichen Geräten das eingebrachte Schmiermittel weitgehend zu entfernen. Diese bisher der Säuberung des Rohres dienende Vorrichtung läßt sich in einfacher Weise umfunktionieren in eine Vorrichtung zum Auftrag der C-haltigen Additive, gegebenenfalls zusammen mit unedleren Metallen bzw. deren hitzezersetzlichen Verbindungen.

Um beim Einbrennvorgang die Ausbildung einer Oxidschicht zu verhindern, die die zu Beginn geschilderte Problematik mit sich bringt, erfolgt in einer vorteilhaften Weiterbildung der Erfindung das Einbrennen der zusammenhängenden Schicht unter Schutzgas wie Argon, Stickstoff, Wasserstoff, Methangas und Kohlenmonoxid, bzw. Gemischen davon.

Das Arbeiten unter Schutzgas läßt sich dadurch noch vorteilhaft abwandeln, daß ein solches Schutzgas gewählt wird bzw. dem Schutzgas solche Bestandteile gezielt beigemischt werden, die den Crackvorgang fördern. So hat sich als vorteilhaft ergeben, dem Schutzgas Argon bis zu 2 Volumenprozent Sauerstoff beizumengen, weil dieser Zusatz den Crackvorgang erleichtert und niedrigere Einbrenntemperaturen ermöglicht. Bei Verwendung von Kohlenmonoxid als Schutzgas ist eine Beimengung von einigen Volumenprozenten $CO_2$ vorteilhaft, das bei den Einbrenntemperaturen in Kohlenmonoxid und atomaren Sauerstoff dissoziiert. Der so entste hende atomare Sauerstoff ist im statu nascendi besonders wirksam und fördert den Crackvorgang der Schmiermittel und C-haltigen Additive. Auch hierfür läßt sich ganz oder teilweise auf vorhandene Vorrichtungen zurückgreifen, weil beim konventionellen Verfahren schon Sauerstoff zur Ausbildung einer Oxidhaut beim Glühen zugegeben wurde bzw. Wasserstoff zum Blankglühen, wenn eine Oxidhaut verhindert werden soll.

Nachfolgend wird die Erfindung an Hand von Beispielen näher erläutert, die bevorzugte Ausführungsformen darstellen, ohne daß die Erfindung jedoch auf die Beispiele beschränkt ist. In allen Beispielen wird ein Kupferrohr nach DIN 1786 mit einem Außendurchmesser von 15 mm und einer Wanddicke von 1 mm verwendet, das jeweils im Gleitziehverfahren mit losem Stopfen auf ein Rohr vom Außendurchmesser 14,8 mm und einer Wanddicke von 0,98 mm verformt wird (Kalibrierzug).

Bei den in den Beispielen verwendeten mittelschweren Mineralölen handelt es sich um durch folgende Werte gekennzeichnete Typen:

| Typ | Dichte $(g/cm^3, 20°C)$ | Viskosität $(cSt, 40°C)$ | Viskosität $(cSt, 100°C)$ | Flammpunkt $(°C)$ | Asche $(\%)$ |
|---|---|---|---|---|---|
| 1 | 0,915 | 990,0 | 45,0 | 324 | 0,01 |
| 2 | 0,880 | 128,4 | 17,5 | 215 | keine |

Es ist aber darauf hinzuweisen, daß im fabrikatorischen Ablauf selbstverständlich wesentlich stärker verformt werden kann und verformt wird. Auch ist die Erfindung nicht auf ein Kupferrohr nach DIN 1786 beschränkt, sondern vom Begriff Kupferrohr werden alle in Betracht kommenden Legierungen umfaßt.

Beispiel 1:

Das Kupferrohr obiger Abmessungen wird nach dem ebenfalls oben angegebenen Verfahren unter Verwendung eines Gemisches aus 50 Gew.% mittelschweren Mineralöls vom Typ 1 und 50 Gew.% ε-Caprolactam im Kalibrierzug wie oben angegeben verformt. Im Anschluß daran wird das so verformte Rohr bei einer Temperatur von 300° C 60 min. lang geglüht. Die gebildete fest haftende und zusammenhängende Schicht hat eine Dicke von 7 μm.

Beispiel 2:

Die Verformung nach Beispiel 1 erfolgt unter Verwendung eines Mineralölgemisches aus 30 Vol.% vom Typ 1 und 70 Vol.% vom Typ 2 als Schmiermittel. Auf die Innenfläche des Rohres wird mit Hilfe einer Bürste und einer von der Rohrreinigung her bekannten Vorrichtung ein C-haltiges Additiv auf Basis eines Polyethylenprepolymers mit einem Schmelzindex im Bereich von 1000g/10 min in einer Menge von 250g/m² aufgetragen und anschließend bei einer Temperatur von 300° C eingebrannt, wobei das Polyethylenprepolymere zu höhermolekularem Polyethylen polymerisiert, gleichzeitig aber zusammen mit dem Schmiermittel zu einer zusammenhängenden, filmartigen Schicht von einer Dicke von 15 μm gecrackt wird.

Beispiel 3:

Als Schmiermittel findet eine Suspension eines Gemisches aus Fettsäuren mit 16 und 18 C-Atomen in einer Menge von 30g/m² (bezogen auf den Feststoffgehalt) Verwendung. Nach Trocknung bei 80° C wird auf die Innenfläche des Rohres gemäß Beispiel 2 ein C-haltiges Additiv auf Basis ε-Caprolactam in einer Menge von 250g/m² aufgetragen, dem 150 g/m² feinpulveriges Zink beigemischt sind. Schmiermittel und C-haltiges Additiv sowie das Metall werden anschließend bei einer Temperatur von 500° C und einer Zeitdauer von 30 min in einer Schutzgasatmosphäre aus $CO_2$ eingebrannt, wobei gemäß dem Boudouard-Gleichgewicht ein Teil des $CO_2$ zu CO und O dissoziiert. Es bildet sich eine zusammenhängende, filmartige Schicht einer Dicke von 50 μm aus.

Beispiel 4:

Die Verformung erfolgt mit einem Mineralöl vom Typ 1. Im Anschluß an die Verformung wird mit Hilfe eines von der Rohrreinigung her her bekannten Filzstopfens mit Untermaß gegen über dem Rohrdurchmesser zusätzlich 150 g/m² Mineralöl vom Typ 1 auf die Rohrwandung aufgebracht. Daran anschliessend erfolgt das Einbrennen und Cracken zu einer gleichmäßigen, filmartigen Schicht einer Dicke von 14 μm. Das Mineralöl stellt in diesem Beispiel also sowohl das Schmiermittel als auch das C-haltige Additiv dar. Aus diesem Grund ist die Gesamtmenge auch deutlich höher, als sie für ein Schmiermittel allein üblich ist.

Beispiel 5:

Ein Kupferrohr mit den oben angegebenen Abmessungen wird nach dem oben angegebenen Verfahren mit einem Gemisch aus 90 Volumenprozent Styrol und 10 Volumenprozent Mineralöl der Type 1 in einem Arbeitsgang im Kalibrierzug verformt. Im Anschluß daran wird das so verformte Rohr bei einer Temperatur von 250° C 60 min. lang geglüht.

Es ergibt sich eine zusammenhängende, störungsfreie und gut haftende Schicht hoher chemischer und mechanischer Beständigkeit einer Dicke von ca. 15 μm, die auch bei kalter Verbiegung des Rohres um fast 180° noch unversehrt ist, wie Aufnahmen im Rasterelektronenmikroskop zeigen.

Für die Aufbringung außenseitiger Schutzschichten allein oder zweckmäßig zusätzlich zur Innenrohrbeschichtung wird das Verfahren sinngemäß angepaßt und das C-haltige Additiv z. B. mit einem ringförmigen Auftragskörper wie einem Filzring aufgetragen.

## Patentansprüche

1. Gegen Korrosion, insbesondere Lochfraßkorrosion geschütztes Metallrohr, insbesondere Kupferrohr, das unter Kaltverformung und Mitverwendung von Schmiermitteln hergestellt ist,
dadurch gekennzeichnet, daß das Metallrohr mindestens innenseitig eine zusammenhängende Schicht von 5 bis 200 μm Dicke aufweist, die das Crackprodukt aus den bei der Verformung verwendeten Schmiermitteln, denen das 0,1 bis 10-fache ihres Gewichtes an c-haltigen Additiven zugesetzt ist, darstellt.

2. Metallrohr nach Anspruch 1,
dadurch gekennzeichnet, daß die Dicke der Schicht 7 bis 100 μm vorzugsweise 10 bis 30 μm beträgt.

3. Metallrohr nach einem der Ansprüche 1 bis 2,
dadurch gekennzeichnet, daß die Schicht das Crackprodukt aus mittelschweren Mineralölen und c-haltigen Additiven ist.

4. Metallrohr nach einem der Ansprüche 1 bis 3,
dadurch gekennzeichnet, daß die c-haltigen Additive frei von Schwefel, Verbindungen des Schwefels, des Chlors und anderer aggressiver Substanzen sind.

5. Metallrohr nach einem der Ansprüche 1 bis 3,
dadurch gekennzeichnet, daß die c-haltigen Additive der Schicht höhermolekulare Verbindungen des Kohlenstoffs sind.

6. Metallrohr nach Anspruch 5,

dadurch gekennzeichnet, daß die c-haltigen Verbindungen Polymerisations-, Polykondensations- und/oder Polyadditions-Kunststoffe und deren Monomere oder Oligomere sind.

7. Metallrohr nach einem der Ansprüche 1 bis 6,
dadurch gekennzeichnet, daß die Schicht 1 bis 30 Gew.% Metalle enthält, die gegenüber dem Metall, aus dem das Rohr geformt ist, unedler sind.

8. Metallrohr nach Anspruch 7,
dadurch gekennzeichnet, daß bei einem Kupferrohr die in der Schicht enthaltenen Metalle Aluminium, Magnesium, Zink und/ oder Eisen sind.

9. Verfahren zur Herstellung eines gegen Korrosion geschützten Metallrohres nach einem der Ansprüche 1 bis 8, dadurch gekennzeichnet, daß Schmiermittel, c-haltige Additive und gegebenenfalls Metalle bzw. hitzezersetzbare Metallverbindungen, die gegenüber dem Rohrmetall unedler sind, bei der Formgebung zugegeben und anschließend bei 150 bis 700°C, vorzugsweise bei 300 bis 600°C eingebrannt werden.

10. Verfahren nach einem der Ansprüche 1 bis 8,
dadurch gekennzeichnet, daß das Schmiermittel beim Ziehvorgang, die c-haltigen Additive und gegebenenfalls unedleren Metalle bzw. deren hitzezersetzbare Verbindungen in einem getrennten Arbeitsschritt nach dem Ziehen auf die Wandung des Metallrohres aufgebracht werden.

11. Verfahren nach einem der Ansprüche 9 und 10,
dadurch gekennzeichnet, daß der Einbrennvorgang unter Schutzgas erfolgt.

12. Verfahren nach einem der Ansprüche 9 bis 11,
dadurch gekennzeichnet, daß das Schutzgas als solches den Crackvorgang fördert oder ihm den Crackvorgang fördernde Bestandteile zugemischt sind.